# EUROPEAN PATENT APPLICATION

(11) **EP 1 422 610 A2**
(43) Date of publication of application: **26.05.2004**
(21) Application number: 03104194.0
(22) Date of filing: 14.11.2003
(51) Int. Cl.: G06F 3/12

(54) **Method for outputting a digital product definition of a printed product to a layout application**

(30) Priority: 21.11.2002 EP 02102613; 14.02.2003 EP 03100339
(71) Applicant: AGFA-GEVAERT, 2640 Mortsel (BE)
(72) Inventor: Leurs, Laurens, 2640, Mortsel (BE); Van de Poel, Koen, 2640, Mortsel (BE)

(57) **Abstract**

A method for making a digital representation of a printed product, the method including (a) creating by a planning application (10) a product definition (12) of the printed product and (b) outputting the product definition (12) by the planning application (10) to a layout application (20) for using the product definition (12) by the layout application (20) for creating an artwork (22) for making the digital representation of the printed product.

## Description

### FIELD OF THE INVENTION

The present invention relates to the generation of a digital representation of a product that is to be printed.

### BACKGROUND OF THE INVENTION AND DEFINITION OF TERMS

In the printing and publishing environment, different players interact in order to obtain print and publishing products, such as magazines, catalogues, promotional, corporate, book or specialty products in offset, flexo, screen, digital, sheet- or web-fed printing. Such products are called "printed products" in this document.

First, some terms are defined that are useful in the present patent application.

"Digital Representation of a Printed Product": the product that is to be printed, represented in digital form.

"Artwork": the electronic document that is generated by the "designer", created while taking into account the "product definition". The artwork is also called design, layout or publication. The artwork is thus a particular digital representation of the printed product.

"Designer": the person in the creative department who will create an artwork in electronic format based on specific instructions and content.

"Product Definition": the definition for the final printed product, holding manufacturing specifications. Some specifications that are important for a designer are: page size, bleed size, number of pages, set of colors used. A product definition often starts from a product intent.

"Layout application": a software application that is used by the designer to generate the artwork. Common layout applications are InDesign^{TM} from Adobe, Xpress^{TM} from Quark, Illustrator™ from Adobe, FreeHand^{TM} from Macromedia.

"Pre-press workflow application": the pre-press department sets up a pre-press workflow for the printed product; the pre-press workflow application is the software application that is used to generate the pre-press product. Agfa Apogee^{TM} is an example of a pre-press workflow application.

The designer needs to create the artwork according to the product definition. Later, the pre-press department will set up a workflow system, also according to the product definition. A problem is that, after the pre-press department receives the artwork from the creative department, and proceeds with it (e.g. Agfa Apogee ^{TM} may receive a PDF-file from Adobe InDesign^{TM} - wherein PDF stands for Portable Document Format), errors may be found. Such an error may be due to a mistake of the designer, who applied the instructions he received to create the artwork in a wrong way.

This problem is especially important since the creative department and the pre-press department are really "two different worlds" ("creative" people versus "production" people). Often, the creative and the pre-press departments belong to different companies.

There is still a need for an improved method for making a digital representation of a printed product.

### SUMMARY OF THE INVENTION AND FURTHER DEFINITION OF TERMS

The present invention is a method for making a digital representation of a printed product, as claimed in independent claims 1 and 3. Preferred embodiments of the invention are set out in the dependent claims. Preferably, a method in accordance with the invention is implemented by a computer program as claimed in claim 10. The invention also includes a data processing system that is suitable for carrying out a method in accordance with the invention, and a computer readable medium comprising program code adapted to carry out a method according to the invention when the program code is run on a computer.

Now, some additional terms are defined that are useful in the present patent application.

"Planning Application", also called "Planning system", "Project Management System" or "MIS" (acronym for Management Information System): a system that creates the product definition. In one embodiment of the invention, this product definition is used both by the creative department, that creates the artwork, and by the pre-press department, that sets up the pre-press workflow for the printed product. Generally, the product definition is also used by the finishing and the printing departments. An example of a planning application is the Agfa Delano^{TM} software.

"Scripting": a way to automate operations in an application. Scripting may be used to preset and/or lock some attributes in a layout application.

"Template": a good example is a Word template. It is a special type of document that is set up with the proper information. When the designer starts to create the artwork, he may ask the layout application to create a new document based on a specific template.

For some applications, the template is limited to one (or two facing) page(s). In this case, the exact number of pages cannot be controlled.

A template, as defined in the present document, is not to be confused with an Imposition template.

"Starting document": similar to a template but it is now already a 'real' document. The application can 'Open' it directly and start working into it.

"Template Generator": a software application that creates a template to be used by a layout application, based on certain parameters (of the product definition).

"Locked" (template or artwork): one or more crucial attributes of a template or document may be locked so that the designer cannot modify them. Examples of such crucial attributes are page size, bleed size, number of pages, color model, spot colors. Remark: the terms "attributes" and "parameters", e.g. of the product definition, are used as synonyms in the present document.

In a preferred embodiment of the invention, a planning application is used to create the product definition, and this product definition is used by the creative department, that creates the artwork. Preferably, this same product definition is also used by the pre-press department, that sets up the pre-press workflow for the printed product. This is advantageous since errors are avoided that may result from the transfer of the instructions from the planning system to the designer. Another advantage is that the pre-press department gets the instructions in the same way as the designer, which also avoids possible errors. It is preferred that a central planning system, that covers both the creative department and the pre-press department, is used to define the product before the creative work is started. In this way, no errors are introduced when transferring the product definition to another department.

In a particular embodiment of the invention, the basic document is then created automatically, based on this product definition. Further, it is preferred that at least one, and that more preferably all crucial attributes of the product definition are locked, so that they are protected from being modified by the layout application. Since the designer can thus no longer modify these attributes, possible errors by the designer are avoided.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 illustrates an embodiment in accordance with the invention;
Fig. 2 illustrates another embodiment in accordance with the invention;
Fig. 3 illustrates yet another embodiment in accordance with the invention.

### DETAILED DESCRIPTION OF THE INVENTION

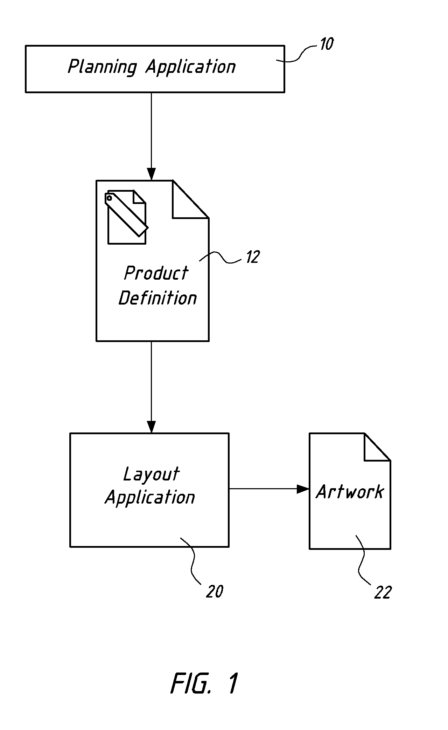

As discussed already above, in a preferred embodiment of the invention a planning application is used to create a product definition, and this product definition is used by the creative department. Fig. 1 shows such an embodiment. In Fig. 1, interpreted from the point of view of a planning department, the product definition 12 is output by a planning application 10 to a layout application 20; the layout application 20 uses the product definition 12 to create an artwork 22. From the point of view of the creative department, the product definition 12 is input by the layout application 20 from the planning application 10, and the layout application 20 uses the product definition 12 to create an artwork 22.

This same product definition 12 may be output by the planning application 10 to a pre-press workflow application (not shown in the drawings) and the pre-press workflow application may then use the product definition 12 to create a pre-press product. Two practical examples are as follows:

### Example 1: Agfa Delano^{TM} (as the planning application):

- creates the product definition in JDF format (JDF stands for Job Definition Format);
- sends the product definition to Adobe InDesign^{TM} (as the layout application);
- sends the product definition to Agfa Apogee^{TM} (as the pre-press workflow application).

### Example 2: Adobe InDesign^{TM} (as the layout application):

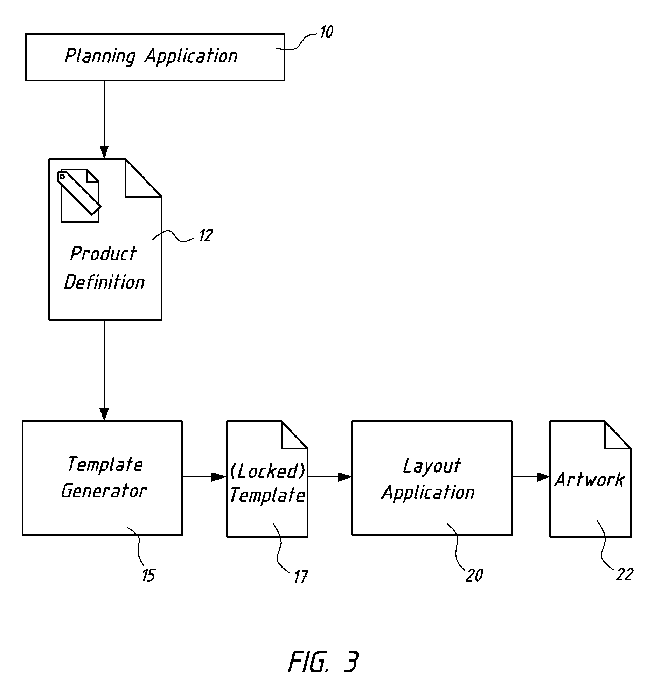

- creates a new document according to the product definition;
- locks the attributes to avoid errors.
Remark: in example 1, "sending" the product definition from Agfa Delano™ to Adobe InDesign™ means that Agfa Delano™, the planning application, outputs the product definition and that Adobe InDesign™, the layout application, inputs it. In this document, "inputting" and "outputting" may be either directly (from the first application to the second one) or indirectly (from the first to the second application via an intermediate application - this is illustrated e.g. by the embodiment illustrated by Fig. 3 and discussed below.

A method according to the invention may be implemented in many different ways, e.g. depending on what the layout application supports. As mentioned above, preferably a central planning system is used, that covers both the creative department and the pre-press department; such a planning system, or planning application 10, is indicated in Figs. 1 - 3. However, a planning application 10 that creates the product definition 12 and that only sends it to the layout application 20, not to the pre-press workflow application, may also be used in the embodiments illustrated by Figs. 1 - 3.

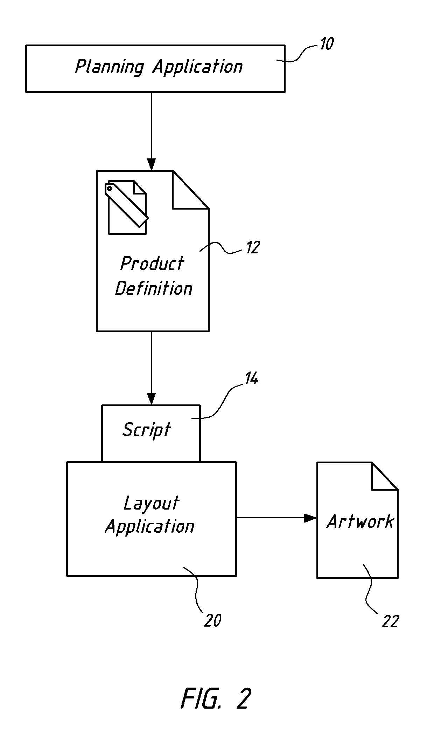

Of the embodiments illustrated by Fig. 1 - 3, Fig. 1 shows the most integrated one, followed by Fig. 2, and Fig. 3 finally shows the least integrated embodiment.

In Fig. 1, the planning application 10 sends the product definition 12 (the product definition parameters) in a format that the layout application 20 understands.

Fig. 2 shows an embodiment wherein the planning application 10 sends the product definition 12 (the product definition parameters) to a script 14, also called intermediate script 14 in the present document; script 14 drives the layout application 20. The layout application 20 is driven by script 14 to produce the starting document (or template). Further below, an example of such a script is given for InDesign^{TM}, written in Visual Basic.

In the embodiment of Fig. 3, the product definition 12 (the product definition parameters) is sent by the planning application 10 to an intermediate application, a so-called template generator 15, that generates the document template 17 or starting document for the layout application 20. The intermediate application 15 translates the product definition 12 to a particular format, i.e. template 17, that the layout application understands. One or more attributes of the template 17 may be locked so that the designer cannot modify them.

The following example is a script, written in Visual Basic, for InDesign™; it illustrates the embodiment of Fig. 2.

### EXAMPLE

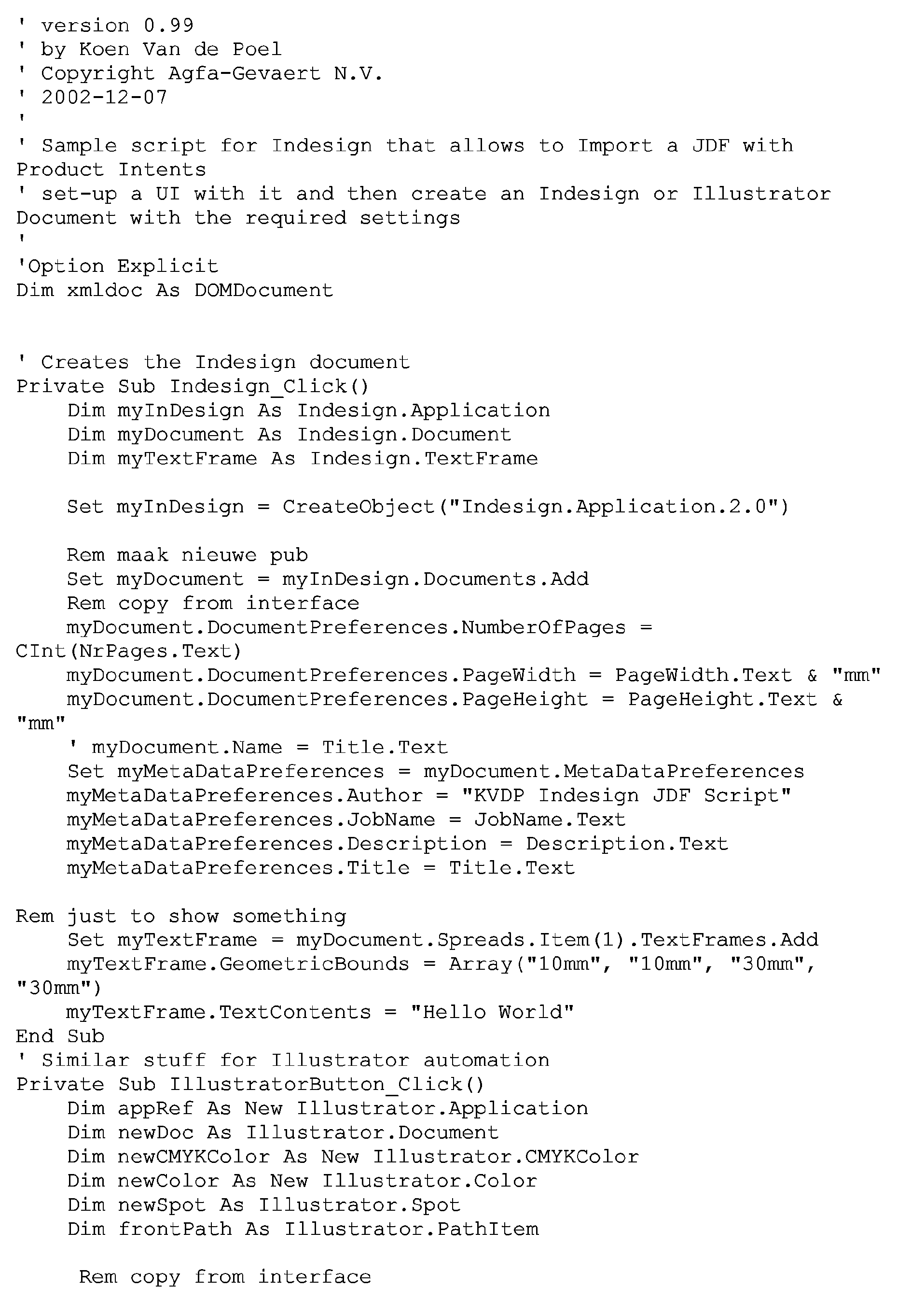

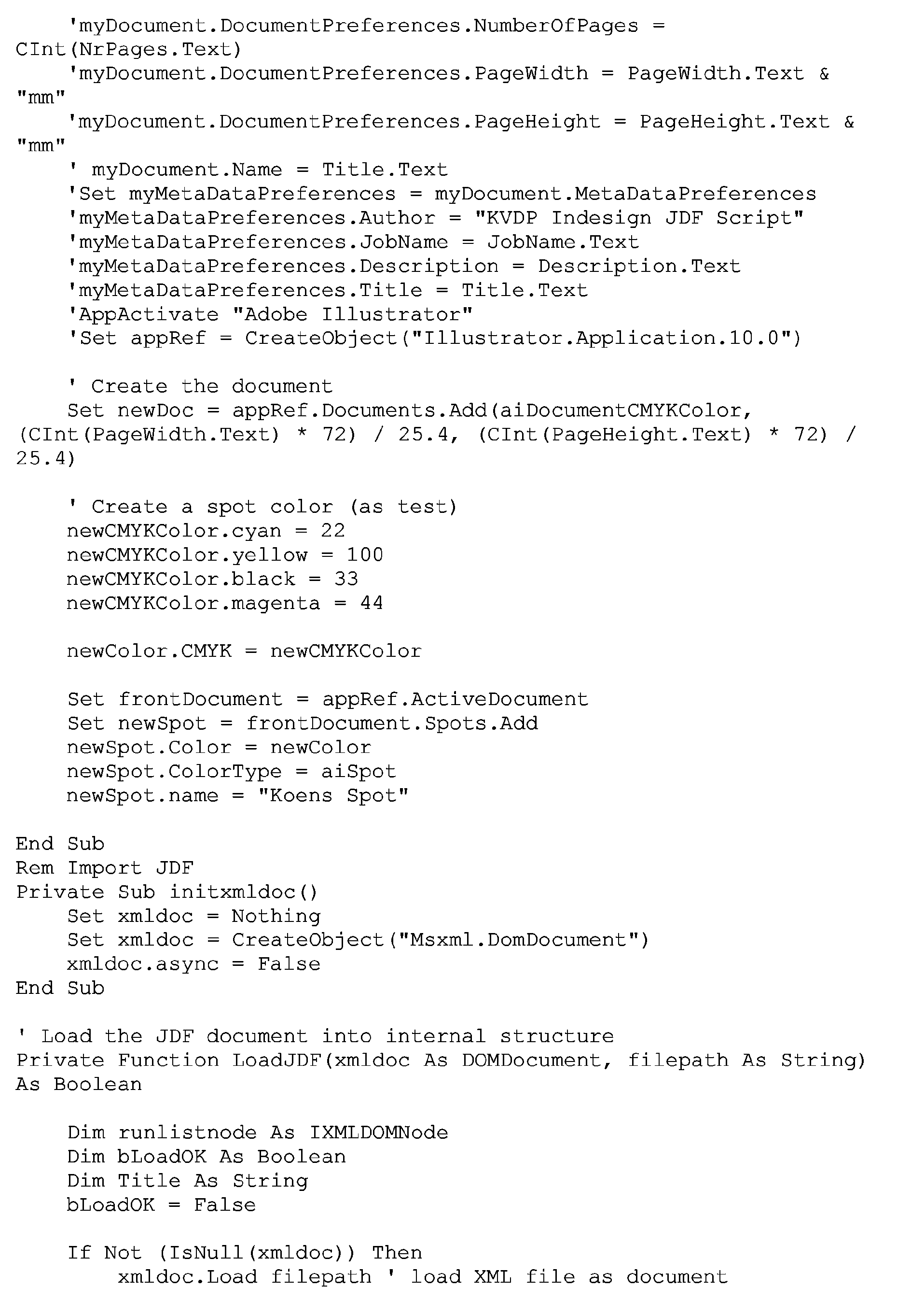

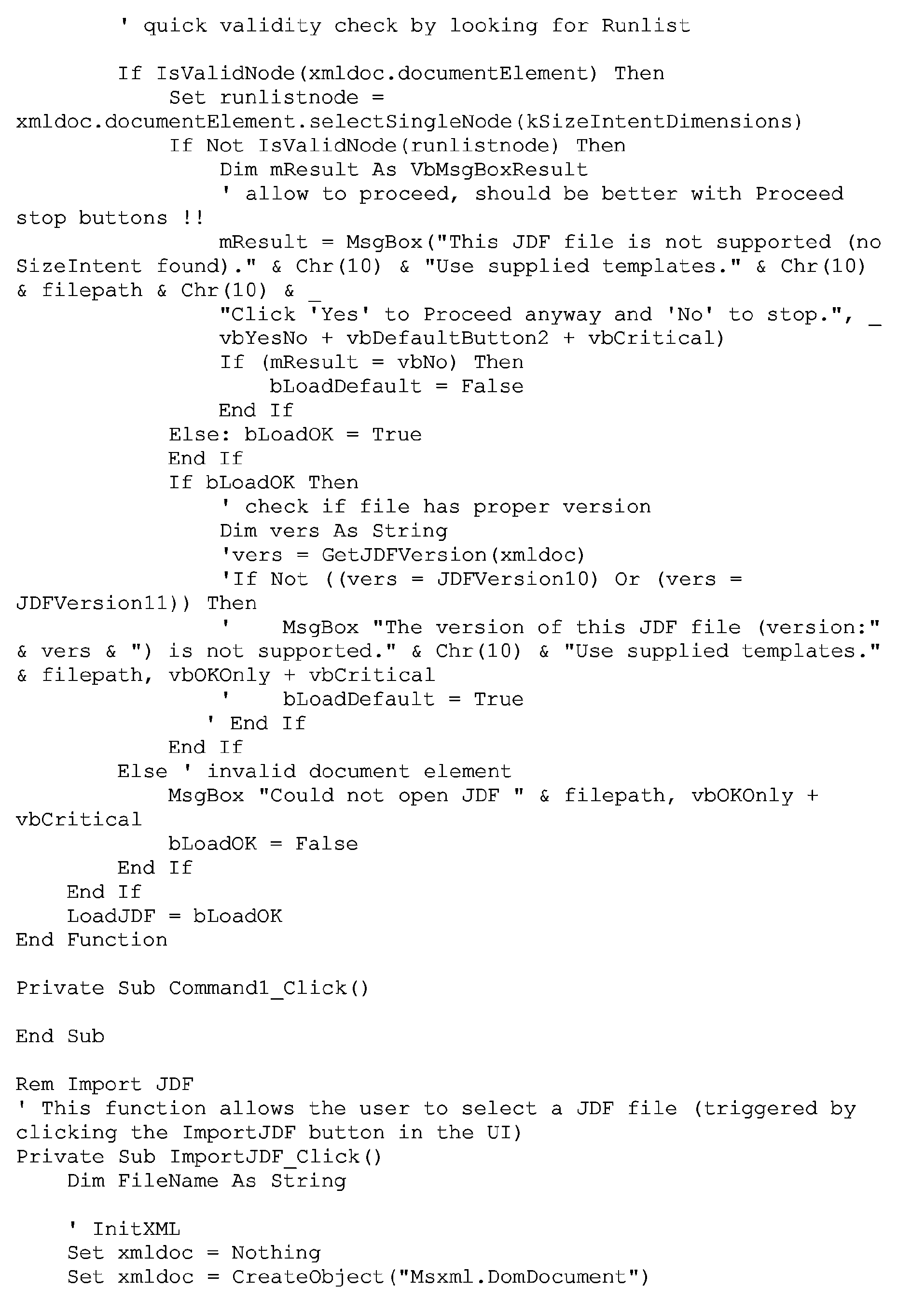

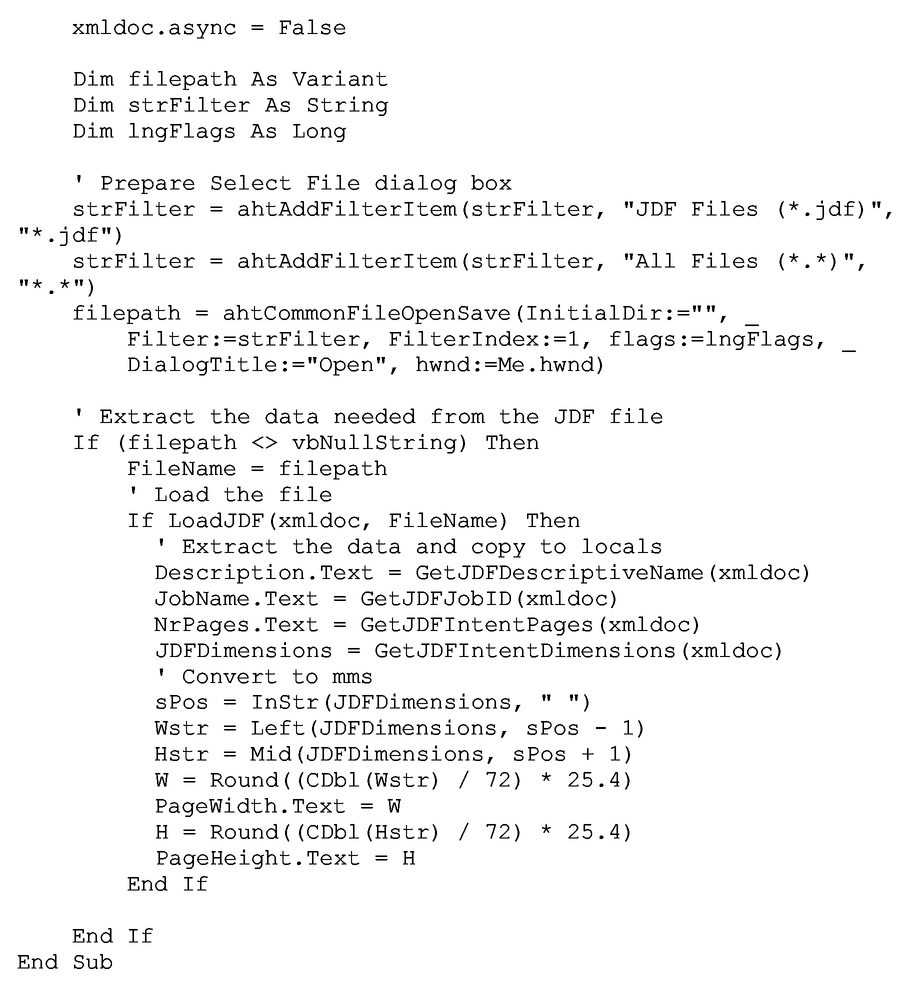

Those skilled in the art will appreciate that numerous modifications and variations may be made to the embodiments disclosed above without departing from the scope of the present invention.

### List of reference signs

- 10 :: planning application
- 12 :: product definition
- 14 :: script
- 15 :: template generator
- 17 :: template
- 20 :: layout application
- 22 :: artwork

## Claims

1. A method for making a digital representation of a printed product comprising the steps of:
- creating by a planning application (10) a product definition (12) of said printed product;
- outputting said product definition (12) by said planning application (10) to a layout application (20) for using said product definition (12) by said layout application (20) for creating an artwork (22) for making said digital representation of said printed product.

2. The method according to claim 1 further comprising the steps of:
- outputting said product definition (12) by said planning application (10) to a pre-press workflow application for using said product definition (12) by said pre-press workflow application for creating a pre-press product.

3. A method for creating an artwork (22) for making a digital representation of a printed product, the method comprising the steps of:
- inputting a product definition (12) of said printed product by a layout application (20) from a planning application (10);
- using said product definition (12) for creating said artwork (22) by said layout application (20).

4. The method according to any one of the preceding claims wherein said product definition (12) comprises a first parameter selected from the group of a page size, a number of pages, a bleed size and a set of colors used.

5. The method according to any one of the preceding claims further comprising the step of:
- locking a second parameter of said product definition (12) for protecting said second parameter from being modified by said layout application (20).

6. The method according to any one of claims 1 to 5 further comprising the step of:
- creating said product definition (12) in Job Definition Format, i.e. JDF.

7. The method according to any one of claims 1 to 5 further comprising the step of:
- outputting said product definition (12) by said planning application (10) to an intermediate script (14) for driving said layout application (20).

8. The method according to any one of claims 1 to 5 further comprising the step of:
- outputting said product definition (12) by said planning application (10) to an intermediate application (15) for sending said product definition (12) in a particular format (17) to said layout application (20).

9. A data processing system comprising means for carrying out the steps of the method according to any one of claims 1 to 8.

10. A computer program comprising computer program code means adapted to perform the method according to any one of claims 1 to 8 when said program is run on a computer.

11. A computer readable medium comprising program code adapted to carry out the method according to any one of claims 1 to 8 when run on a computer.
